Europäisches Patentamt

European Patent Office

Office européen des brevets

(19)

(11) Veröffentlichungsnummer: **0 440 081 A2**

## (12) EUROPÄISCHE PATENTANMELDUNG

(21) Anmeldenummer: **91100806.8**

(22) Anmeldetag: **23.01.91**

(51) Int. Cl.5: **H04Q 7/04, H04B 7/26**

(30) Priorität: **01.02.90 DE 4002851**
**16.02.90 DE 4004847**
**15.03.90 DE 4008165**

(43) Veröffentlichungstag der Anmeldung:
**07.08.91 Patentblatt 91/32**

(84) Benannte Vertragsstaaten:
**AT BE CH DE DK ES FR GB GR IT LI LU NL SE**

(71) Anmelder: **Standard Elektrik Lorenz**
**Aktiengesellschaft**
**Lorenzstrasse 10**
**W-7000 Stuttgart 40(DE)**

(84) **DE**

Anmelder: **ALCATEL N.V.**
**Strawinskylaan 341 (World Trade Center)**
**NL-1077 XX Amsterdam(NL)**

(84) **BE CH DK ES FR GB GR IT LI LU NL SE AT**

(72) Erfinder: **Heidemann, Rolf, Dr.**
**Weinsberger Weg 14**
**W-7146 Tamm(DE)**

(74) Vertreter: **Kugler, Hermann, Dipl.-Phys. et al**
**Standard Elektrik Lorenz AG Patent- und**
**Lizenzwesen Postfach 30 09 29**
**W-7000 Stuttgart 30(DE)**

(54) **Zellulares Mobilfunksystem.**

(57) Bei einem Mobilfunksystem mit einer Zentrale und mit Feststationen, bei dem die Feststationen ($FS_1$ bis $FS_n$) Funksignale mobiler Teilnehmer (MS) senden und von diesen empfangen, werden erfindungsgemäß die Funksignale nicht wie üblich in den Feststationen erzeugt bzw. verarbeitet, sondern in der Zentrale (1). Die Zentrale (1) enthält also für jede Feststation ($FS_1$ bis $FS_n$) einen Mikrowellensender/- empfänger ($SE_1$ bis $SE_n$), der die zu den Feststationen zu sendenden Signale in Funksignale umsetzt und die von den Feststationen empfangenen Funksignale in die Basisbandlage umsetzt. Dies hat den Vorteil, daß Trägerfrequenzeinrichtungen für eine Vielzahl von Feststationen gemeinsam verwendbar sind, so daß die Kosten des Systems verringert sind.

EP 0 440 081 A2

FIG.1

## ZELLULARES MOBILFUNKSYSTEM

Die Erfindung betrifft ein Mobilfunksystem nach dem Oberbegriff des Patentanspruchs. Ein solches System ist bekannt aus "Elektrisches Nachrichtenwesen", Band 63, Nr. 1/1989, Seiten 45 bis 51 oder aus "telcom-report" 12 (1989), Heft 5, Seiten 142 bis 145. Es handelt sich dabei um das europaweit als sogenanntes GSM-System standardisierte zellulare Mobilfunksystem.

Bei diesem bekannten System ist eine Zentrale, dort "Mobilkommunikations-Vermittlungsstelle" genannt, über Leitungen mit mehreren Feststationen verbunden (sternförmig oder linienförmig), und die Zentrale sendet diejenigen Signale, die die Feststationen über eine Funkverbindung zu mobilen Teilnehmern senden soll, in der Basisbandlage, z.B. als PCM 30-Signale, zu den Feststationen. Die Feststationen haben Trägerfrequenzeinheiten, die die auszusendenden Signale aus der Basisbandlage in Mikrowellensignale umsetzen, damit sie über die Funkverbindung zu den mobilen Teilnehmern ausgesendet werden können. Die von den mobilen Teilnehmern empfangenen Funksignale werden in den Feststationen in die Basisbandlage umgesetzt und in dieser Lage zu der Zentrale übertragen. Die Einrichtungen, welche die von den Feststationen auszusendenden Funksignale erzeugen und die von den mobilen Teilnehmern empfangenen Funksignale verarbeiten, gehören bei dem bekannten System also zu den Feststationen. In der Zentrale werden keine Signale mehr auf andere Frequenzen umgesetzt, sondern es werden nur Signale zu den dazugehörigen Anschlüssen der Vermittlung durchgeschaltet.

Ist der abzuwickelnde Funkverkehr so dicht, daß man die jeweils von einer Feststation versorgten Zellen zweckmäßigerweise sehr klein wählt, also zu sogenannten "Mikrozellen" übergeht, so sind sehr viele Zellen und damit sehr viele Feststationen erforderlich, um ein bestimmtes geographisches Gebiet zu versorgen. Legt man dazu das bekannte System zugrunde, so bedeutet dies einen hohen Kostenaufwand, da sehr viele Feststationen vorhanden sein müssen und jede von ihnen hauptsächlich wegen ihrer HF-Trägereinheit teuer ist.

Es ist daher die Aufgabe der Erfindung, ein Mobilfunksystem der eingangs genannten Art anzugeben, das, insbesondere bei einer Vielzahl von vorhandenen Zellen, Kostenvorteile gegenüber dem bekannten System bietet.

Die Aufgabe wird wie im Patentanspruch angegeben gelöst. Die erfindungsgemäße zentrale Anordnung der Einrichtungen, die im System notwendig sind, um die von den Feststationen auszusendenden Funksignale zu erzeugen und die von den Feststationen empfangenen Funksignale zu verarbeiten, bietet den Kostenvorteil, daß teuere Bauteile, z.B. Oszillatoren für Trägerfrequenzen für eine Vielzahl von erfindungsgemäß in der Zentrale vorhandenen Trägerfrequenzeinrichtungen gemeinsam genutzt werden können. Weiterhin ist der Vorteil gegeben, daß Änderungen im System im Zuge des Ausbaus oder im Zuge einer neuen Zelleneinteilung in der Zentrale vorgenommen werden können und die Feststationen unverändert bleiben können.

Die Erfindung wird nun anhand der Zeichnungen beispielsweise näher erläutert. Es zeigen

Fig. 1    eine schematische Übersicht über das erfindungsgemäße Mobilfunksystem und

Fig. 2    eine detailliertere Darstellung der Übertragungseinrichtungen einer der Übertragungsstrecken zwischen einer Feststationen und der Zentrale.

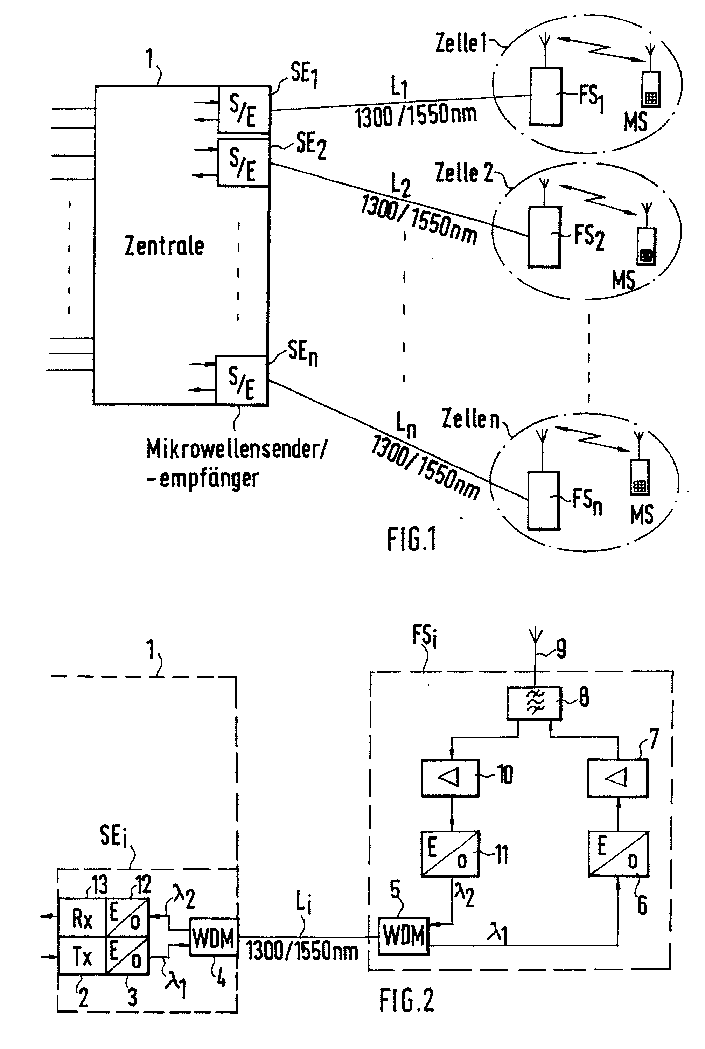

Das System nach Fig. 1 besteht im wesentlichen aus einer Zentrale 1, aus Feststationen $FS_1$ bis $FS_n$, aus Mobilstationen MS und aus Leitungen $L_1$ bis $L_n$, von denen jede eine Feststation mit der Zentrale verbindet. Die Leitungen $L_1$ bis $L_n$ sind Lichtwellenleiter, und über sie werden in den beiden Übertragungseinrichtungen optische Signale mit verschiedenen Wellenlängen, z.B. 1300 nm und 1550 nm, übertragen. Jede Feststation befindet sich in einer geographischen Zelle und wickelt den Funkverkehr mit den innerhalb der Zelle sich aufhaltenden Mobilstationen ab. Die Zentrale ist wie bei dem bekannten System an das öffentliche Fernsprechnetz angeschlossen. Sie kann aber auch mit einer übergeordneten Zentrale verbunden sein, die ihrerseits an das öffentliche Fernsprechnetz angeschlossen ist. Auch in diesem Falle ist sie für die mit ihr verbundenen Feststationen die Zentrale.

Die aus dem öffentlichen Fernsprechnetz an mobile Teilnehmer einer Zelle zu sendenden Signale werden erfindungsgemäß bereits in der Zentrale in Funksignale mit der Frequenzlage umgesetzt, in der sie von den Feststationen ausgesendet werden sollen. In der umgekehrten Übertragungsrichtung werden Funksignale, die eine Feststation von mobilen Teilnehmern empfängt, nicht bereits in der Feststation sondern erst in der Zentrale verarbeitet, d.h. in die Basisbandlage zur weiteren Übertragung im öffentlichen Fernsprechnetz umgesetzt.

Hierzu enthält die Zentrale 1, wie in Fig. 1 gezeigt, für jede an sie angeschlossene Feststation einen Mikrowellensender/-empfänger. Falls die Feststationen die ihnen zugeteilten Frequenzkanäle im Frequenzsprungverfahren und im Zeitmultiplex benutzen, wie dies beim bekannten System der Fall ist, gehören zu den Funktionen der Mikrowellensender/-empfänger auch die dafür notwendigen Funktionen, da sie sich direkt auf das Erzeugen und Verarbeiten der von den Feststationen ausgestrahlten bzw. empfangenen Funksignale beziehen. In den Feststationen verbleiben nur noch die Funktionen, die direkt mit dem Aussenden oder Empfangen der Funksignale zusammenhängen, also im wesentlichen eine Sender-Endstufe und ein Empfangsverstärker.

In der Fig. 1 sind die genannten Mikrowellensender/-empfänger mit $SE_1$ bis $SE_n$ bezeichnet. An ihren Eingängen, die nur schematisch dargestellt sind, werden in Basisbandlage die für jeweils eine Feststation bestimmten Signale aus dem öffentlichen Fernsprechnetz eingegeben bzw. an ihren Ausgängen die von einer Feststation empfangenen Signale in Richtung zum öffentlichen Fernsprechnetz ausgegeben.

In Fig. 2 ist detaillierter dargestellt, welche Übertragungseinrichtungen des gesamten Systems in welchen Teilen des Systems vorhanden sind. Als Bestandteil der gestrichelt angedeuteten Zentrale 1 ist im linken Teil der Fig. 2 einer der Mikrowellensender/-empfänger $SE_1$ bis $SE_n$ gezeigt und mit $SE_i$ bezeichnet. Über einen Lichtwellenleiter $L_i$ ist dieser Mikrowellensender/-empfänger mit der zugehörigen Feststation verbunden, die mit $FS_i$ bezeichnet ist. Der eigentliche Mikrowellensender, der die oben beschriebene Funktion hat, die für die Feststation bestimmten Signale aus der Basisbandlage in die HF-Lage umzusetzen und gegebenenfalls die vorhandenen Frequenzkanäle nach dem Frequenzsprungverfahren und im Zeitmultiplex zu belegen, ist eine Einheit, die mit Tx bezeichnet ist und das Bezugszeichen 2 trägt. An ihrem Ausgang liefert sie die Funksignale, wie sie die Feststation $FS_i$ auszusenden hat. Da die Leitung $L_i$ ein Lichtwellenleiter ist, werden die Funksignale in einem Elektrisch-Optisch-Wandler 3 in ein optisches Signal umgewandelt, beispielsweise mit einer Wellenlänge $\lambda_1$ von 1550 nm und über einen Wellenlängenmultiplexer/-demultiplexer 4 und den Lichtwellenleiter $L_i$ zur Feststation $FS_i$ übertragen. Dort gelangt das optische Signal mit der Wellenlänge $\lambda_1$ auf einen Wellenlängenmultiplexer/-demultiplexer 5, der das optische Signal mit der Wellenlänge $\lambda_1$ an einem Ausgang ausgibt, der mit dem Eingang eines Optisch-Elektrisch-Wandlers 6 verbunden ist. Am Ausgang des Optisch-Elektrisch-Wandlers erscheinen die von der Feststation $FS_i$ auszusendenden Funksignale, die lediglich noch eine Verstärkung in einer Sender-Endstufe 7 erfahren und eine Frequenzweiche 8 durchlaufen, bis sie von der Antenne 9 der Feststation ausgesendet werden.

Funksignale, die von der Antenne 9 dieser Feststation von mobilen Teilnehmern empfangen werden, gelangen über die Frequenzweiche 8 zu einem Empfangsverstärker 10 und werden, verstärkt in diesem Verstärker, in einem Elektrisch-Optisch-Wandler 11 in ein optisches Signal mit einer Wellenlänge $\lambda_2$ von beispielsweise 1300 nm umgesetzt, das über den Wellenlängenmultiplexer/demultiplexer 5, den Lichtwellenleiter $L_i$ zu der Zentrale 1 übertragen wird. Dort gelangt es über den Wellenlängenmultiplexer/-demutliplexer 4, in einen auf die Wellenlänge $\lambda_2$ abgestimmten Optisch-Elektrisch-Wandler 12, der es in die Funksignale zurück umsetzt, welche die Feststation empfangen hat. Schließlich gelangen diese vom Ausgang des Optisch-Elektrisch-Wandlers 12 auf den eigentlichen Mikrowellenempfänger 13 (mit Rx bezeichnet), der sie in die Basisbandlage zur weiteren Verarbeitung in der Zentrale umsetzt.

Wie in Fig. 2 gezeigt, enthält die Feststation nur einfache und billige Bauteile wie Verstärker und Filter zum Senden und Empfangen der Funksignale und übliche kostengünstige Komponenten zum optischen Übertragen der Funksignale im Wellenlängenmultiplex. Da zur Versorgung kleiner Zellen wenig Sendeleistung erforderlich ist, bedeutet auch der Verstärker der Sender-Endstufe 7 keinen erheblichen Aufwand.

Die verstärkende Sender-Endstufe 7 kann sogar entfallen, wenn die Feststation für eine sehr kleine Zelle vorgesehen ist, z.B. eine sogenannte "Mikrozelle" mit einem Zellendurchmesser von etwa 100 m oder eine sogenannte "Picozelle" mit der Größe eines Zimmers. Dem Optisch-Elektrisch-Wandler 6 in Fig. 2 ist in solchen Fällen statt der verstärkenden Sender-Endstufe 7 ein passives Anpaß-Netzwerk nachgeschaltet, dessen Ausgang über die Frequenzweiche 8 zur Antenne 9 führt.

Ist der Optisch-Elektrisch-Wandler 6 einer mit einer PIN-Diode als Wandler-Element, so ist die gesamte Sendeeinrichtung der Feststation eine passive Einrichtung.

An Stelle einer PIN-Diode kann der Optisch-Elektrisch-Wandler 6 auch eine Lawinen-Photodiode (engl.: "Avalanche Photodiode" (APD)) enthalten. Die Sendeeinrichtung ist dann eine aktive Sendeeinrichtung. Mit Lawinen-Photodioden sind heutzutage Stromverstärkungsfaktoren von mehr als 10 erreichbar.

In jedem der beiden Fälle hat die Sendeeinrichtung den Vorteil, daß sie keine elektronischen Verstärker enthält, die typischerweise generell eine Bandbegrenzung bewirken und meistens auch kritische Nichtlinearitäten aufweisen.

Nachstehend werden noch Varianten des bisher beschriebenen Ausführungsbeispiels erläutert, die sich auf die Leitungsführung der die Feststationen mit der Zentrale verbindenden Lichtwellenleiter und das auf diesen angewendete Übertragungsverfahren beziehen. In dem vorstehend beschriebenen Ausführungsbeispiel sind die Feststationen sternförmig über jeweils einen Lichtwellenleiter mit der Zentrale verbunden. Stattdessen können sie auch über einen einzigen Lichtwellenleiter linienförmig mit der Zentrale verbunden sein, indem sie über Koppler an diesen Lichtwellenleiter angeschlossen sind.

Die Übertragung kann bei dieser Konfiguration wie folgt geschehen:

Für jede Feststation wird ein eigenes Wellenlängenpaar verwendet, z.B. für $FS_1$ das Wellenlängenpaar 1300/1550 nm, für $FS_2$ das Wellenlängenpaar 1310/1560 nm usw., jeweils die ersten Wellenlänge des Paares für die eine und die zweite Wellenlänge des Paares für die andere Übertragungsrichtung. Dabei ist nur die optische Wellenlänge fest. Die von einer Feststation momentan gesendeten und die von einer Feststation empfangenen Funksignale sind "beliebig" wählbar. Flexible Kanalzuordnung und Frequenzsprungverfahren sind auch bei dieser Konfiguration leicht möglich.

Feststationen, die genügend weit auseinanderliegen, so daß gegenseitige Störungen des Funkverkehrs ausgeschlossen sind, können dieselben Frequenzen für die von ihnen zu sendenden oder zu empfangenden Funksignale verwenden.

Auch die Wellenlängenpaare der an einen einzigen Lichtwellenleiter angeschlossenen verschiedenen Feststationen können mehrfach verwendet werden, wenn die Signale verschiedener Feststationen durch andere Kriterien sich voneinander unterscheiden, z.B. durch unterschiedliche Zeitlagen (Zeitmultiplex) oder unterschiedliche Codes bei digitalen Signalen (Codemultiplex).

**Patentansprüche**

Mobilfunksystem mit einer Zentrale und mit Feststationen, wobei die Zentrale mit den Feststationen über Leitungen verbunden ist und die Feststationen Funksignale zu mobilen Teilnehmern senden und von diesen empfangen, und mit Einrichtungen zum Erzeugen der zu sendenden Funksignale und zum Verarbeiten der empfangenen Funksignale

**dadurch gekennzeichnet,**

- daß die Einrichtungen ($SE_1$ bis $SE_n$) in der Zentrale (1) angeordnet sind,
- daß die Leitungen zwischen den Feststationen ($FS_1$ bis $FS_n$) und der Zentrale (1) Lichtwellenleiter ($L_1$ bis $L_n$) sind, und
- daß in der Zentrale (1) und in den Feststationen ($FS_1$ bis $FS_n$) optische Sender und optische Empfänger vorhanden sind, um die von den Feststationen ($FS_1$ bis $FS_n$) zu sendenden Funksignale und die von den Feststationen empfangenen Funksignale optisch zwischen der Zentrale (1) und den Feststationen ($FS_1$ bis $FS_n$) zu übertragen.

EP 0 440 081 A2

FIG.1

FIG.2

6